# EUROPÄISCHE PATENTSCHRIFT

(11) **EP 1 304 202 B1**
(45) Veröffentlichungstag und Bekanntmachung des Hinweises auf die Patenterteilung: **02.08.2006**
(21) Anmeldenummer: 02018672.2
(22) Anmeldetag: 21.08.2002
(51) Int. Cl.: B29C 33/30, B29C 49/48, B29C 49/56, B29D 22/00, F16F 9/04, B29C 35/02

(54) **Heizschlauchlose Fertigung von 3-Faltenbälgen**
Manufacturing of three membered bellows without using heated preform
Fabrication de soufflets à trois pièces sans utilisant une préforme chauffé

(30) Priorität: 20.10.2001 DE 10152259
(43) Veröffentlichungstag der Anmeldung: 23.04.2003
(73) Patentinhaber: ContiTech Luftfedersysteme GmbH, 30165 Hannover (DE)
(72) Erfinder: Gnirk, Wolfgang, 31275 Lehrte (DE); Degenhardt, Manfred, 30982 Pattensen (DE); Muth, Joachim, 31556 Wölpinghausen (DE)
(74) Vertreter: Finger, Karsten

(56) Entgegenhaltungen:
- GB-A- 917 806
- US-A- 2 814 072
- US-A- 5 851 476

## Beschreibung

Die Erfindung betrifft ein Verfahren zur heizschlauchlosen Fertigung von Faltenbälgen aus zylindrischen, nicht vorgeformten Rohlingen - gemäß dem Oberbegriff des Anspruchs 1

Luftfeder-2-Faltenbälge und deren Herstellung sind seit langem bekannt (siehe z. B. US 2,221,470; US 2,814,072 und US 4,749,345).

Eine Vulkanisationsform zur Fertigung von 2-Faltenbälgen für Luftfedern besteht üblicherweise aus drei Segmenten, nämlich aus zwei endseitigen und einem mittleren Segment. Diese drei Segmente sind zunächst voneinander beabstandet und müssen im Laufe des Vulkanisationsprozesses zusammengefahren werden. Dabei bleibt das mittlere Segment in Ruhe. Lediglich die beiden äußeren Segmente werden synchron auf das mittlere Segment zu bewegt.

Für die Fertigung von 3-Faltenbälgen benötigt man zwischen zwei endseitigen Segmenten zwei innere Segmente. Ein in Ruhe befindliches mittleres Segment gibt es nicht. Ein synchrones Zusammenfahren der vier Segmente ist nicht ohne weiteres möglich, da die einzelnen Segmente mit unterschiedlichen Geschwindigkeiten bewegt werden müssen.

Die US 5,851,476, Fig.1 und 2, zeigt eine im Blasformverfahren herstellbare, gefältete Dichtmanschette. Die Form der diesbezüglichen Herstellvorrichtung besteht aus zwei spiegelbildlich zueinander ausgebildeten Hälften (Fig. 12), und zwar einer oberen und einer unteren Hälfte. Weiterhin besteht die Form aus einer endseitigen äußeren Profil-Vollschale (252 und 262), die wiederum jeweils aus einer oberen (Fig. 12) und einer unteren Profil-Halbschale besteht, und dazwischen mehreren mittleren inneren Profil-Vollschalen (250, 248, 246, 242 und 240), die wiederum jeweils aus einer oberen und einer unteren Profil-Halbschale bestehen (Fig. 12). Die Profilsegmente können mit Hilfe einer Art Scherengitter aufeinander zu bewegt werden.
Die Stabilität dieses Scherengitters scheint größeren Kräften, wie sie für die Herstellung von Luftfeder-Faltenbälgen erforderlich sind, kaum gewachsen zu sein. Insgesamt ist zu bezweifeln, dass auf diese Weise ein präzise reproduzierbares Ergebnis erzielt werden kann. Da der herzustellende Balg lediglich ein Schutzbalg ist, der keinen größeren Kräften ausgesetzt ist, ist es nicht verwunderlich, dass über die Länge des Balgs keinerlei Verstärkungseinlagen vorgesehen sind und somit auch die Profilsegmente diesbezüglich keinerlei Konturen aufweisen.

Die Aufgabe der Erfindung, wie sie mit Anspruch 1 erstmals gelöst ist, besteht darin, einen Faltenbalg mit mehr als zwei Falten zu fertigen.
Bevorzugte Verfahrensschritte zur Herstellung eines 3-Faltenbalges sind in Anspruch 2 genannt. Ausfiihrungsformen und apparative Weiterbildungen einer Vorrichtung zur Durchführung des Verfahrens ergeben sich aus dem Anspruch 3 und aus den weiteren Unteransprüchen.

Die Erfindung wird anhand eines Ausführungsbeispiels der Vulkanisationsform näher beschrieben. Es zeigt:

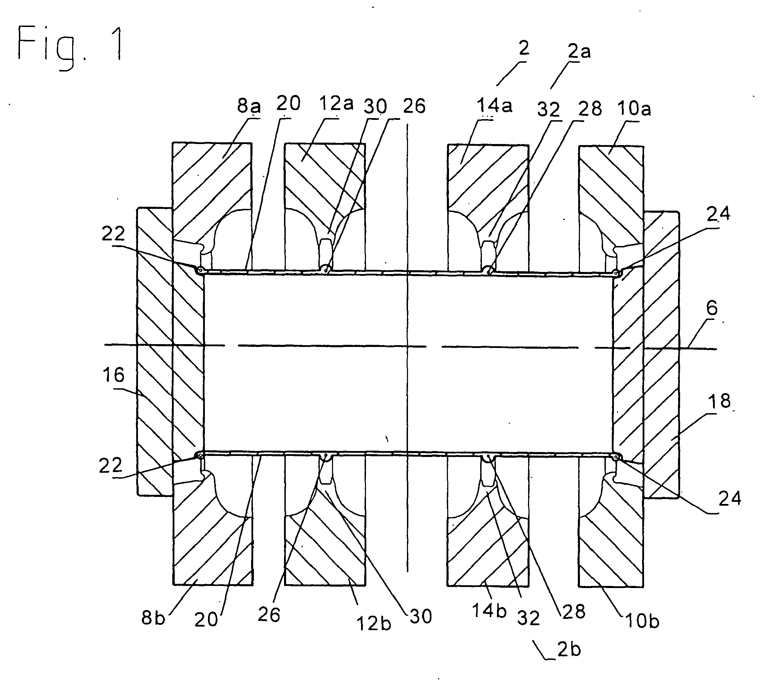

Fig. 1 die Prinzipdarstellung des Längsschnitts durch eine erfindungsgemäße Vulkanisationsform mit Rohling;

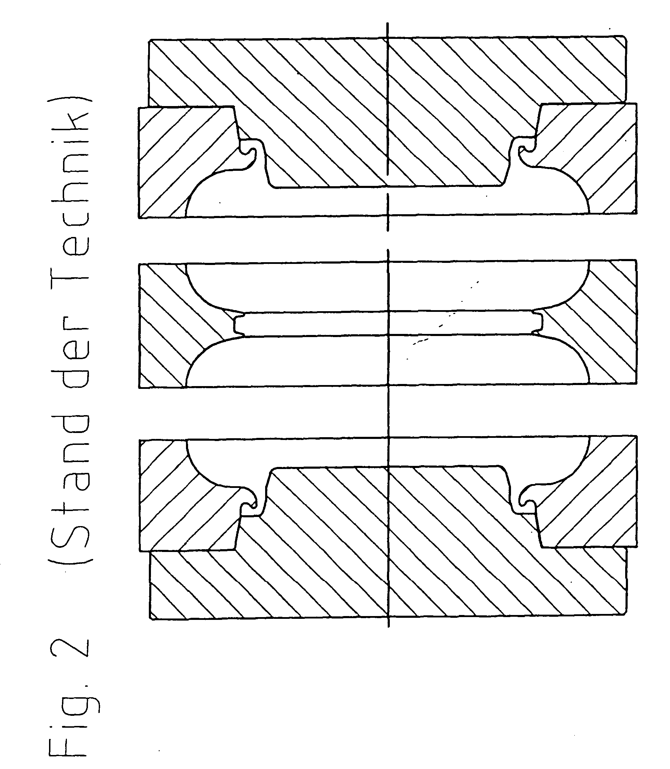

Fig. 2 die Prinzipdarstellung des Längsschnitts durch eine herkömmliche Vulkanisationsform zur Herstellung eines 2-Faltenbalgs;

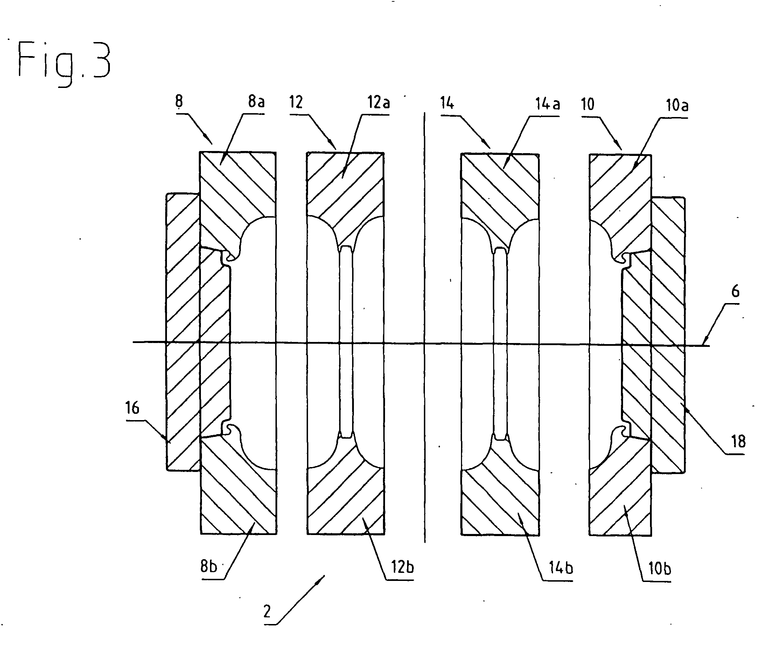

Fig. 3 die Prinzipdarstellung des Längsschnitts durch eine erfindungsgemäße Vulkanisationsform mit geschlossenen Formschalen;

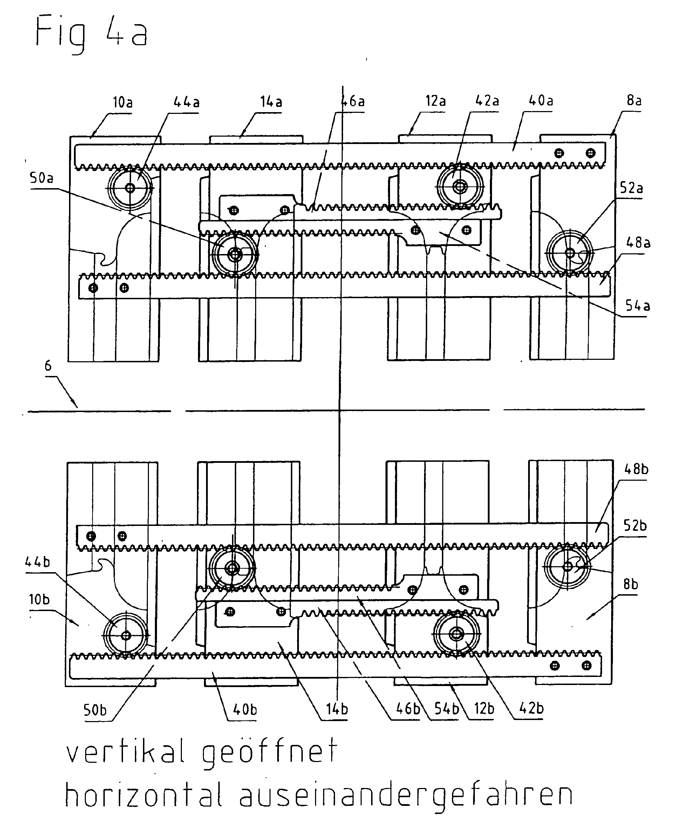

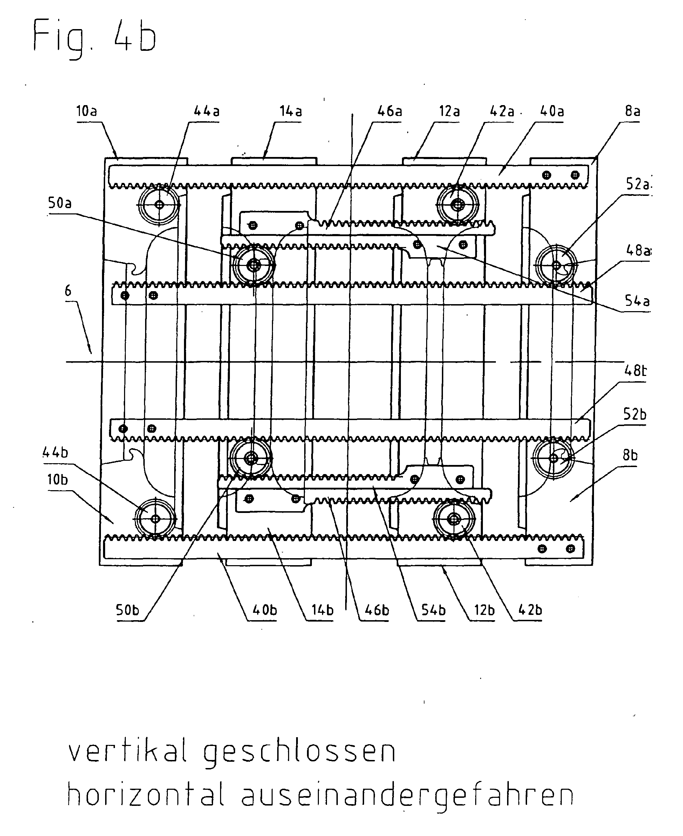

Fig. 4 die Prinzipdarstellung des Längsschnitts durch eine Vulkanisationsform mit Darstellung der erfindungsgemäßen Zahnstangen-Steuerung; und zwar:
   Fig. 4a vertikal geöffnet, horizontal auseinandergefahren;
   Fig. 4b vertikal geschlossen, horizontal auseinandergefahren, und

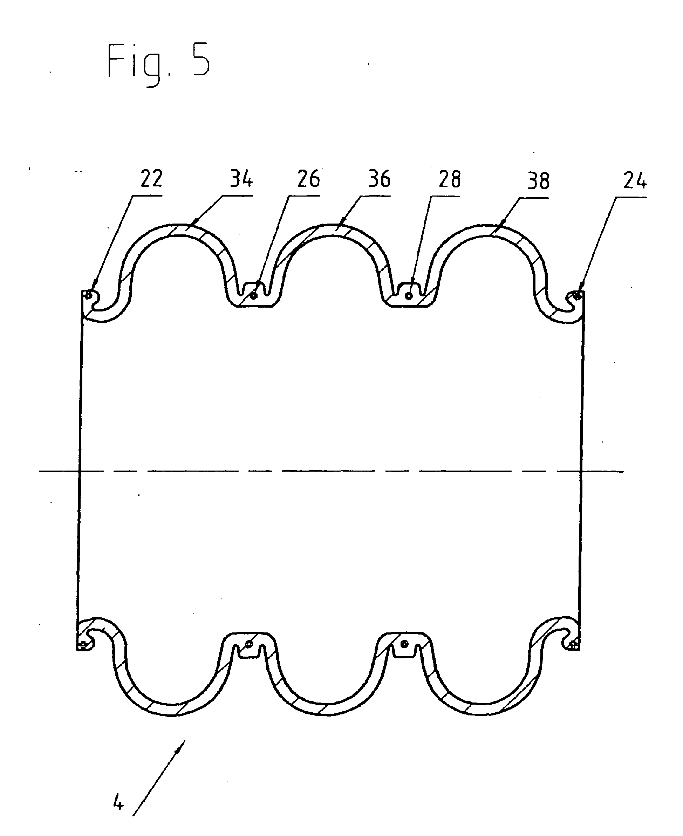

   Fig. 5 einen ausgeformten 3-Faltenbalg im Längsschnitt.

Wie in Fig. 1 dargestellt, ist die erfindungsgemäße (Vulkanisations-)Form 2 zur Herstellung eines 3-Faltenbalgs 4 (Fig. 5) durch eine durch die Längsachse 6 geführte horizontale Ebene in zwei spiegelbildlich zueinander ausgebildete bzw. spiegelbildlich zueinander angeordnete Hälften geteilt und zwar in eine obere 2a und in eine untere Hälfte 2b.

Jede dieser beiden Hälften 2a, 2b besteht wiederum aus mehreren Segmenten, nämlich beidendig jeweils einer endseitigen (äußeren) Profil-Halbschale 8a, 8b; 10a, 10b und dazwischen zwei mittleren (inneren) Profil-Halbschalen 12a, 12b; 14a, 14b.

Eine obere 8a und eine untere endseitige Halbschale 8b bilden zusammen eine Vollschale 8 (Fig. 3), die an ihrer Innenseite eine konkave Innenfläche aufweist. Dasselbe gilt für die andere obere 10a und untere endseitige Halbschale 10b. Auch diese bilden zusammen eine Vollschale 10, die ebenfalls eine konkave Innenfläche aufweist.

Jede obere mittlere (innere) Profil-Halbschale 12a bzw. 14a bildet mit der jeweils zugehörigen unteren mittleren (inneren) Profil-Halbschale 12b bzw. 14b zusammen eine mittlere (innere) Profil-Vollschale 12 bzw. 14, die jeweils beidseitig konkav, d. h. bikonkav ausgebildet sind.

D. h.: Der profilgebende Formenbereich wird durch längs-mittiggeteilte Profilschalen 8, 10, 12, 14 gebildet. Die Profil-Segmente 8a, 8b, 10a, 10b, 12a, 12b, 14a, 14b werden in einem oberen und einem unteren Grundgestell (nicht dargestellt) axial geführt und sind durch stirnseitig am Grundgestell montierte Hydraulikzylinder (nicht dargestellt) zu betätigen.

Die aus Grundgestell, Profilschalen 8, 10, 12, 14 und beidseitig angeordneten Stirntellern 16, 18 bestehende Form 2 wird in eine sich vertikal schließende Presse (nicht dargestellt) eingebaut, wobei die Profil- bzw. Produktachse 6 horizontal liegt.

Weiterhin zeigt die Fig. 1 einen Rohling 20, der axial zwischen den Segmenten 8a, 8b; 10a, 10b; 12a, 12b; 14a, 14b der Vulkanisationsform 2 angeordnet ist. Der Rohling 20 kann an seinen Enden mit Wülsten 22, 24 versehen sein. Im Bereich der mittleren (inneren) Profilhalbschalen 12a/12b; 14a/14b weist der Rohling 20 jeweils einen Drahtgürtel 26, 28 auf, während die mittleren (inneren) Profil-Halbschalen 12a/12b; 14a/14b jeweils eine entsprechende Drahtgürtelkontur 30, 32 aufweisen.

Bei aus solchen Rohlingen 20 herzustellenden 3-Faltenbälgen 4, die zwischen den Falten 34, 36, 38 (Fig. 5) einvulkanisierte Drahtgürtel 26, 28 aufweisen, ist es erforderlich, dass im geöffneten, horizontal auseindergefahrenen Zustand der Form 2 der Abstand zwischen den Drahtgürtelkonturen 30, 32 der Profilschalen 12, 14 identisch ist mit dem Abstand zwischen den auf dem Rohling 20 angeordneten Drahtgürtelkernen 26, 28.

Die Rohlinge 20 werden ohne zusätzlichen Arbeitsgang von einer Wickeltrommel (nicht dargestellt) in die Form 2 gebracht. Die Verformung des Rohlings 20 in die Faltenkontur, und damit auch die Veränderungen der Gewebewinkel der einzelnen Gewebelagen, erfolgt gleichmäßig.

Die oberen 8a, 10a, 12a, 14a und die unteren Profilsegmente 8b, 10b, 12b 14b stehen jeweils über Zahnstangen 40a, 46a, 48a, 54a; 40b, 46b, 48b, 54b und Zahnräder 42a, 44a, 50a, 52a; 42b, 44b, 50b, 52b nebst zusätzlichen Zahnkränzen 42a' 50a'; 42b', 50b' miteinander in Wirkverbindung (Fig. 4a, Fig. 4b). Und zwar befindet sich an der einen (oberen) endseitigen (äußeren) Profil-Halbschale 8a die Zahnstange 40a, die mit einem auf der ersten mittleren (inneren) Profil-Halbschale 12a befindlichen Zahnrad 42a und mit einem auf der anderen endseitigen (äußeren) Profil-Halbschale 10a befindlichen Zahnrad 44a in Eingriff steht.

Das auf der einen mittleren (inneren) Profil-Halbschale 12a befindliche Zahnrad 42a weist einen zweiten Zahnkranz 42a' mit halber Anzahl von Zähnen auf. Dieser Zahnkranz 42a' steht mit einer an der zweiten mittleren (inneren) Profil-Halbschale 14a befestigten Zahnstange 46a in Eingriff.

Des weiteren gibt es eine an der zweiten (oberen) endseitigen (äußeren) Profil-Halbschale 10a befestigte Zahnstange 48a, die mit einem auf der zweiten mittleren (inneren) Profil-Halbschale 14a befindlichen Zahnrad 50a und mit einem auf der ersten endseitigen (äußeren) Profil-Halbschale 8a befindlichen Zahnrad 52a in Eingriff steht.

Das auf der zweiten mittleren (inneren) Profil-Halbschale 14a befindliche Zahnrad 50a weist einen zweiten Zahnkranz 50a' mit halber Anzahl von Zähnen auf. Dieser Zahnkranz 50a' steht mit einer an der ersten mittleren (inneren) Profil-Halbschale 12a befestigten Zahnstange 54a in Eingriff.

Bei den unteren Profil-Segmenten 8b, 10b, 12b und 14b gibt es - verglichen mit den oberen Verknüpfungen - synchrone Verknüpfungen.

Auch hier befinden sich an der einen (unteren) endseitigen (äußeren) Profilhalbschale 8b eine Zahnstange 40b, die mit einem auf der ersten unteren mittleren (inneren) Profil-Halbschale 12b befindlichen Zahnrad 42b und mit einem auf der anderen endseitigen (äußeren) Profil-Halbschale 10b befindlichen Zahnrad 44b in Eingriff steht.

Das auf der einen mittleren (inneren) Profil-Halbschale 12b befindliche Zahnrad 42b weist einen zweiten Zahnkranz 42b' mit halber Anzahl von Zähnen auf. Dieser Zahnkranz 42b' steht mit einer an der zweiten mittleren (inneren) Profil-Halbschale 14b befindlichen Zahnstange 46b in Eingriff.

Darüber hinaus gibt es eine an der zweiten (unteren) endseitigen (äußeren) Profil-Halbschale 10b befestigte Zahnstange 48b, die mit einem auf der zweiten mittleren (inneren) Profil-Halbschale 14b befindlichen Zahnrad 50b und mit einem auf der ersten endseitigen (äußeren) Profil-Halbschale 8b befindlichen Zahnrad 52b in Eingriff steht.

Auch hier weist das auf der zweiten mittleren (inneren) Profil-Halbschale 14b befindliche Zahnrad 50b einen zweiten Zahnkranz 50b' mit halber Anzahl von Zähnen auf. Dieser Zahnkranz 50b' steht mit einer an der ersten mittleren (inneren) Profil-Halbschale 12b befestigten Zahnstange 54b in Eingriff.

Anstelle des Vortriebs mit Zahnstange und Zahnrad kann auch ein vergleichbarer anderer linearer mechanischer, elektromechanischer oder pneumatischer Vortrieb zum Einsatz gelangen.

Durch gesteuerte Bewegungsabläufe, die durch Zahnstangensteuerungen synchron von beiden Stirnseiten erfolgt, werden die Enden des Rohlings 20 zunächst auf beiden Stirnseiten dichtend und formgebend jeweils an einen Stirnteller 16, 18 geklemmt. Im weiteren Bewegungsablauf fahren die Stirnteller 16, 18 die Profilschalen 8, 10, 12, 14 unter gleichzeitigem Bombagedruck so zusammen, dass die äußeren Profilschalen 8, 10 den doppelte Weg wie die inneren Profilschalen 12, 14 zurücklegen. Die Ausformung des Rohlings 20 über den Bombagedruck ist abgeschlossen, wenn die Form 2 die Schließstellung erreicht hat. Der Vulkanisationsvorgang kann eingeleitet werden.

### Bewegungsabläufe

### I. Öffnungsstellung der Form 2

Die 3-Faltenbalgpresse befindet sich in geöffneter Stellung. Dabei ist die Form 2 vertikal geöffnet. Die Stirnteller 16, 18 der Form 2 sind über die beiden Hydraulikzylinder in geöffneter Stellung (lichtes Maß zwischen den geöffneten Stirntellern 16, 18 ca. Rohlingslänge plus 20 mm). Die Seitenteile der Form 2 sind über eine einzustellende Wegbegrenzung (ca. der halbe Öffnungshub) deckungsgleich im Ober- 2a und Unterteil 2b auseinander gefahren.

### II. Einlegen des Rohlings 20

Der Rohling 20 wird in die geöffnete Unterhälfte 2b eingelegt. Dabei tauchen die Innenkonen der Stirnteller 16, 18 ca. 10 mm je Seite in den Rohling 20 ein und zentrieren ihn stirnseitig vor. Die Formenmittelteile 12, 14 nehmen die eingelegten Kerne 26, 28 des Rohlings 20 auf. Die Stirnteller 16, 18 werden auf Rohlingslänge gefahren. Die Presse fährt so zu, dass die Form 2 zwar vertikal geschlossen ist, aber auf den Formenteilungsflächen kein Schließdruck der Presse ist. Die Stirnteller 16, 18 fahren, betätigt über die angekoppelten Hydraulikzylinder, gegen die Formenseitenteile 8, 10 und klemmen dabei den jeweiligen Rohlingswulst 22 bzw. 24 formgebend und dichtend ein. Unter gleichzeitigem Bombagedruck im Rohling 20 fahren die beiden großen Hydraulikzylinder die Form 2 axial in die Schließstellung. Das Zusammenfahren der Formen-Seiten- 8, 10 und -Mittelteile 12, 14 erfolgt synchron über eine Zahnstangensteuerung, wobei die äußeren Seitenteile 8, 10 den doppelten Weg zurücklegen wie die Mittelteile 12, 14. In der axialen Öffnungsstellung muss die Position der beiden Mittelteilabstände identisch mit dem Abstand der beiden inneren Kerne 26, 28 des Rohlings 20 sein.

Die Ausformung des Rohlings 20 über den Bombagedruck ist abgeschlossen, wenn die Form 2 die Schließstellung erreicht hat. Der Vulkanisationsvorgang kann eingeleitet werden.

### III. Öffnen der Form 2

Nach Beendigung des Vulkanisationsvorgangs müssen beim Öffnen der Form 2 zunächst die Stirnteller 16, 18 auffahren, danach fahren die Formseiten- 8, 10 und -Mittelteile 12, 14 ca. 10 mm auseinander, um den Artikel in der Form 2 zu lösen, erst dann öffnet die Presse. Die Artikel können nun entnommen werden. Erst nach Entnahmen der Artikel werden die Formenseitenteile in die unter I) beschriebene Stellung gefahren. Die Formenschalen werden auf den Laufflächen des Formengestells über Führungselemente mit Trockenlaufeigenschaften geführt. Diese Führungsflächen dürfen nicht mit Schmiermittel in Verbindung kommen.

### Bezugszeichenliste

- 2: (Vulkanisations-)Form
- 2a, 2b: spiegelbildlich ausgebildete Hälften der Form
- 2a: Oberteil der Form, obere Hälfte
- 2b: Unterteil der Form, untere Hälfte
- 4: 3-Faltenbalg
- 6: Längsachse der Form, Profil- und Produktachse
- 8a, 8b, 10a, 10b, 12a, 12b, 14a, 14b: (Profil-)Segmente
- 8a, 8b; 10a, 10b: endseitige (äußere) Profil-Halbschale
- 8, 10: endseitige (äußere) Profil-Vollschale
- 12a, 12b; 14a, 14b: mittlere (innere) Profil-Halbschale
- 12; 14: mittlere (innere) Profil-Vollschale
- 16, 18: Stirnteller
- 20: Rohling
- 22, 24: Wülste
- 26, 28: Drahtgürtel, Drahtgürtelkern
- 30, 32: Drahtgürtelkontur
- 34, 36,: 38 Falten
- 40a, 40b: Zahnstangen
- 46a, 46b: "
- 48a, 48b: "
- 54a, 54b: "
- 42a, 42b: Zahnräder
- 44a, 44b: "
- 50a, 50b: "
- 52a, 52b: "

## Patentansprüche

1. Verfahren zur heizschlauchlosen Fertigung von Faltenbälgen mit Hilfe einer Vulkanisationsform (2), die durch eine durch die Längsachse (6) geführte horizontale Ebene in zwei spiegelbildlich zueinander ausgebildete bzw. spiegelbildlich zueinander angeordnete Hälften, und zwar in eine obere (2a) und in eine untere Hälfte (2b), geteilt ist,
- wobei die obere (2a) und die untere Hälfte (2b) wiederum jeweils aus mehreren, zunächst beabstandeten Segmenten (8a, 8b, 10a, 10b, 12a, 12b, 14a, 14b) bestehen, die mittels einer Presse bewegbar sind,
- wobei durch synchrone Bewegungsabläufe, die durch lineare Steuerungen von beiden Stirnseiten her erfolgt, zunächst die Enden eines Faltenbalg-Rohlings (20) auf beiden Stirnseiten der aus Segmenten bestehenden Form (2) dichtend und formgebend jeweils an einen Stirnteller (16, 18) geklemmt werden,
- wobei im weiteren Bewegungsablauf die Stirnteller (16, 18) und die als Profilschalen (8, 10, 12, 14) ausgebildeten Segmente (8a, 8b, 10a, 10b, 12a, 12b, 14a, 14b) unter gleichzeitigem Bombagedruck zusammengefahren werden,
- wobei die Ausformung des Rohlings (20) über den Bombagedruck abgeschlossen ist, wenn die Form (2) die Schließstellung erreicht hat, und
- wobei schließlich der Vulkanisationsvorgang eingeleitet wird,
**dadurch gekennzeichnet,**
**dass** es sich um ein Verfahren zur Fertigung von 3-Faltenbälgen handelt,
- wobei die Form (2) zwei innere Profilschalen (12, 14) hat,
- wobei die Innenkonen der Stirnteller (16, 18) ca. 10 mm je Seite in den in die geöffnete Unterhälfte der Form (2) eingelegten Rohling (20) eintauchen und stirnseitig vorzentrieren,
- wobei die Formteile Drahtgürtelkonturen (30, 32) aufweisen, die eingelegte Kerne (26, 28) des Rohlings (20) aufnehmen, und
- wobei die äußeren Profilschalen (8, 10) während des Formschließens und Formöffnens den doppelten Weg wie die inneren Profilschalen /12, 14) zurücklegen.

2. Verfahren nach Anspruch 1,
**dadurch gekennzeichnet,**
- **dass** die Stirnteller (16, 18) auf Rohlingslänge gefahren werden, wobei die Presse so zufährt, dass die Form (2) zwar vertikal geschlossen ist, aber auf den Formenteilungsflächen kein Schließdruck der Presse ist,
- **dass** daraufhin die Stirnteller (16, 18) - betätigt über zwei große, angekoppelte Hydraulikzylinder - gegen die Formenseitenteile fahren und dabei den jeweiligen Rohlingswulst (22, 24) formgebend und dichtend einklemmen,
- **dass** anschließend unter gleichzeitigem Bombagedruck im Rohling (20) die beiden Hydraulikzylinder die Form (2) axial in die Schließstellung fahren, wobei das Zusammenfahren der Form-Seiten- (8, 10) und -Mittelteile (12, 14) synchron über eine Zahnstangensteuerung erfolgt und die äußeren Seitenteile (8, 10) verglichen mit den Mittelteilen (12, 14) den doppelten Weg zurücklegen,

3. Vorrichtung zur Durchführung des Verfahrens nach Anspruch 1 oder 2,
**dadurch gekennzeichnet,**
- **dass** eine Vulkanisationsform (2) durch eine durch die Längsachse (6) geführte horizontale Ebene in zwei spiegelbildlich zueinander ausgebildete bzw. spiegelbildlich zueinander angeordnete Hälften (2a, 2b), und zwar in eine obere (2a) und in eine untere Hälfte (2b) geteilt ist,
- **dass** die Form (2) aus jeweils einer endseitigen äußeren Profil-Vollschale (8, 10), die wiederum jeweils aus einer oberen (8a, 10a) und einer unteren Profil-Halbschale (8b, 10b) besteht, und dazwischen zwei mittlere innere Profil-Vollschalen (12, 14), die wiederum jeweils aus einer oberen (12a, 14a) und einer unteren Profil-Halbschale (12b, 14b) bestehen,
- **dass** die endseitigen äußeren Profil-Vollschalen (8, 10) jeweils eine konkave Innenfläche aufweisen, und
- **dass** die mittleren inneren Profil-Vollschalen (12, 14) jeweils beidseitig konkav, d. h. bikonkav, ausgebildet sind.

4. Vorrichtung nach Anspruch 3,
**dadurch gekennzeichnet,**
**dass** die aus Profilschalen (8, 10, 12, 14) und beidendig angeordneten Stirntellern (16, 18) bestehende Form (2) in eine Presse eingebaut ist.

5. Vorrichtung nach Anspruch 3 oder 4,
**dadurch gekennzeichnet,**
**dass** die mittleren inneren Profilschalen (12, 14) jeweils eine Drahtgürtelkontur (30, 32) zur Aufnahme eines zwischen Falten (34, 36, 38) mit Drahtgürteln versehenen Rohlings (20) aufweisen.

6. Vorrichtung nach einem der Ansprüche 3 bis 5,
**dadurch gekennzeichnet,**
**dass** die oberen (8a, 10a, 12a, 14a) und die unteren Profil-Halbschalen (8b, 10b, 12b, 14b) jeweils über Zahnstangen (40a, 46a, 48a, 54a; 40b, 46b, 48b, 54b) und Zahnräder (42a, 44a, 50a, 52a; 42b, 44b, 50b, 52b) nebst zusätzlichen Zahnkränzen miteinander in Wirkverbindung stehen,
- wobei sich an der einen oberen, endseitigen, äußeren Profil-Halbschale (8a) die Zahnstange (40a) befindet, die mit einem auf der ersten mittleren inneren Profil-Halbschale (12a) befindlichen Zahnrad (42a) und mit einem auf der anderen endseitigen äußeren Profil-Halbschale (10a) befindlichen Zahnrad (44a) in Eingriff steht, und
- wobei das auf der einen mittleren inneren Profil-Halbschale (12a) befindliche Zahnrad (42a) einen zweiten Zahnkranz mit halber Anzahl von Zähnen aufweist, der mit einer an der zweiten mittleren inneren Profil-Halbschale (14a) befestigten Zahnstange (46a) in Eingriff steht,
- wobei es des weiteren eine an der zweiten, oberen, endseitigen, äußeren Profil-Halbschale (10a) befestigte Zahnstange (48a) gibt, die mit einem auf der zweiten mittleren inneren Profil-Halbschale (14a) befindlichen Zahnrad (50a) und mit einem auf der ersten endseitigen äußeren Profil-Halbschale (8a) befindlichen Zahnrad (52a) in Eingriff steht, und
- wobei das auf der zweiten, mittleren, inneren Profil-Halbschale (14a) befindliche Zahnrad (50a) einen zweiten Zahnkranz mit halber Anzahl von Zähnen aufweist, der mit einer an der ersten, mittleren, inneren Profil-Halbschale (12a) befestigten Zahnstange (54a) in Eingriff steht, und wobei es bei den unteren Profil-Segmenten (8b, 10b, 12b, 14b) - verglichen mit den oberen Verknüpfungen - synchrone Verknüpfungen gibt.

## Claims

1. Method for manufacturing bellows without using a heated preform, with the aid of a vulcanizing mould (2), which is divided by a horizontal plane taken through the longitudinal axis (6) into two halves formed symmetrically in relation to each other or arranged symmetrically in relation to each other, to be precise an upper half (2a) and a lower half (2b),
- the upper half (2a) and the lower half (2b) in turn respectively comprising a number of initially spaced-apart segments (8a, 8b, 10a, 10b, 12a, 12b, 14a, 14b), which can be moved by means of a press,
- the ends of a bellows blank (20) first being clamped on both end faces of the mould (2) comprising segments, in a sealing and shaping manner respectively on an end plate (16, 18) by synchronous movement sequences which are performed from both end faces by linear controls,
- in the further movement sequence, the end plates (16, 18) and the segments (8a, 8b, 10a, 10b, 12a, 12b, 14a, 14b) formed as profiled shells (8, 10, 12, 14) being moved together with simultaneous crowning pressure,
- the moulding of the blank (20) being completed by means of the crowning pressure when the mould (2) has reached the closed position, and
- finally, the vulcanizing process being initiated,
**characterized**
**in that** it is a method for manufacturing three-membered bellows,
- the mould (2) having two inner profiled shells (12, 14),
- the inner cones of the end plates (16, 18) entering by about 10 mm on each side into the blank (20) placed into the opened lower half of the mould (2) and pre-centring it on the end face,
- the mould parts having wire belt contours (30, 32), which receive inserted cores (26, 28) of the blank (20), and
- the outer profiled shells (8, 10) covering twice the distance as the inner profiled shells (12, 14) during the mould closing and mould opening.

2. Method according to Claim 1, **characterized**
- **in that** the end plates (16, 18) are moved to the length of the blank, the press being closed in such a way that the mould (2) is vertically closed but there is no closing pressure of the press on the mould parting surfaces,
- **in that** the end plates (16, 18) are then moved - actuated by means of two large, coupled-on hydraulic cylinders - against the mould side parts and thereby clamp the respective bead (22, 24) of the blank in a shaping and sealing manner,
- **in that** subsequently, with simultaneous crowning pressure in the blank (20), the two hydraulic cylinders move the mould (2) axially into the closed position, the moving together of the mould side parts (8, 10) and mould centre parts (12, 14) taking place synchronously by means of a toothed rack control, and the outer side parts (8, 10) covering twice the distance in comparison with the centre parts (12, 14).

3. Device for carrying out the method according to Claim 1 or 2, **characterized**
- **in that** a vulcanizing mould (2) is divided by a horizontal plane taken through the longitudinal axis (6) into two halves (2a, 2b) formed symmetrically in relation to each other or arranged symmetrically in relation to each other, to be precise an upper half (2a) and a lower half (2b),
- **in that** the mould (2) comprises respective end-side outer profiled full shells (8, 10), which in turn respectively comprise an upper profiled half shell (8a, 10a) and a lower profiled half shell (8b, 10b), and in between two central inner profiled full shells (12, 14), which in turn respectively comprise an upper profiled half shell (12a, 14a) and a lower profiled half shell (12b, 14b),
- **in that** the end-side outer profiled full shells (8, 10) respectively have a concave inner surface, and
- **in that** the central inner profiled full shells (12, 14) are respectively formed such that they are concave on both sides, i.e. biconcave.

4. Device according to Claim 3, **characterized in that** the mould (2), comprising profiled shells (8, 10, 12, 14) and end plates (16, 18) arranged at both ends, is installed in a press.

5. Device according to Claim 3 or 4, **characterized in that** the central inner profiled shells (12, 14) respectively have a wire belt contour (30, 32) for receiving a blank (20) provided with wire belts between folds (34, 36, 38).

6. Device according to one of Claims 3 to 5, **characterized in that** the upper profiled half shells (8a, 10a, 12a, 14a) and the lower profiled half shells (8b, 10b, 12b, 14b) are respectively in operative connection with one another via toothed racks (40a, 46a, 48a, 54a; 40b, 46b, 48b, 54b) and toothed wheels (42a, 44a, 50a, 52a; 42b, 44b, 50b, 52b) along with additional toothed rims,
- the toothed rack (40a), which is in engagement with a toothed wheel (42a) located on the first central inner profiled half shell (12a) and with a toothed wheel (44a) located on the other end-side outer profiled half shell (10a), being located on the one upper, end-side, outer profiled half shell (8a), and
- the toothed wheel (42a) located on the central inner profiled half shell (12a) having a second toothed rim with half the number of teeth, which is in engagement with a toothed rack (46a) fastened to the second central inner profiled half shell (14a),
- there also being a toothed rack (48a), which is fastened to the second, upper, end-side, outer profiled half shell (10a) and is in engagement with a toothed wheel (50a) located on the second central inner profiled half shell (14a) and with a toothed wheel (52a) located on the first end-side outer profiled half shell (8a), and
- the toothed wheel (50a) located on the second, central, inner profiled half shell (14a) having a second toothed rim with half the number of teeth, which is in engagement with a toothed rack (54a) fastened to the first, central, inner profiled half shell (12a), and the lower profiled segments (8b, 10b, 12b, 14b) undergoing synchronous interlinkages
- compared with the upper interlinkages.

## Revendications

1. Procédé de fabrication de soufflets sans préforme chauffée à l'aide d'un moule de vulcanisation (2), qui est divisé par un plan horizontal passant par l'axe longitudinal (6) en deux moitiés réalisées avec une symétrie spéculaire l'une par rapport à l'autre et disposées symétriquement l'une par rapport à l'autre, à savoir en une moitié supérieure (2a) et une moitié inférieure (2b),
- la moitié supérieure (2a) et la moitié inférieure (2b) étant à nouveau chacune constituées de plusieurs segments d'abord espacés (8a, 8b, 10a, 10b, 12a, 12b, 14a, 14b), qui peuvent être déplacés au moyen d'une presse,
- les extrémités d'une ébauche de soufflet (20) étant d'abord serrées respectivement contre un plateau de bout (16, 18) de manière étanche et façonnée sur les deux côtés frontaux du moule (2) constitué de segments, par des séquences de mouvements synchrones, qui se produisent par des commandes linéaires depuis les deux côtés frontaux,
- les plateaux de bout (16, 18) et les segments (8a, 8b, 10a, 10b, 12a, 12b, 14a, 14b) .réalisés sous forme de coques profilées (8, 10, 12, 14) étant rapprochés avec application de pression de bombement simultanée dans une autre séquence de mouvement,
- la formation de l'ébauche (20) étant achevée par la pression de bombement lorsque le moule (2) a atteint la position fermée, et
- finalement l'opération de vulcanisation étant amorcée,
**caractérisé en ce que**
le procédé est un procédé de fabrication de soufflets à 3 pièces,
- le moule (2) ayant deux coques profilées intérieures (12, 14),
- les cônes intérieurs des plateaux de bout (16, 18) plongeant sur environ 10 mm de chaque côté dans l'ébauche (20) introduite dans la moitié inférieure ouverte du moule (2) et se précentrant du côté frontal,
- les pièces du moule présentant des contours en forme d'armature en fil métallique (30, 32) qui reçoivent les noyaux introduits (26, 28) de l'ébauche (20), et
- les coques profilées extérieures (8, 10) parcourant pendant la fermeture du moule et l'ouverture du moule le double de la distance parcourue par les coques profilées intérieures (12, 14).

2. Procédé selon la revendication 1,
**caractérisé en ce que**
- les plateaux de bout (16, 18) sont déplacés sur la longueur de l'ébauche, la presse avançant de telle sorte que le moule (2) soit certes fermé verticalement, mais qu'aucune pression de fermeture de la presse ne s'applique sur les faces de division du moule,
- **en ce qu**'ensuite les plateaux de bout (16, 18)
- actionnés par le biais de deux gros cylindres hydrauliques accouplés - se déplacent vers les parties latérales du moule et ce faisant serrent le bourrelet respectif de l'ébauche (22, 24) de manière étanche et façonnée,
- **en ce qu**'ensuite, avec application simultanée d'une pression de bombement dans l'ébauche (20), les deux cylindres hydrauliques déplacent axialement le moule (2) dans la position de fermeture, le rapprochement des parties latérales (8, 10) et centrales (12, 14) du moule s'effectuant de manière synchrone par le biais d'une commande à crémaillère, et les parties latérales extérieures (8, 10) parcourant le double de la distance par rapport aux parties centrales (12, 14).

3. Dispositif pour la mise en oeuvre du procédé selon la revendication 1 ou 2,
**caractérisé en ce qu'**
- un moule de vulcanisation (2) est divisé par un plan horizontal passant par l'axe longitudinal (6) en deux moitiés (2a, 2b) réalisées avec une symétrie spéculaire l'une par rapport à l'autre et disposées symétriquement l'une par rapport à l'autre, à savoir en une moitié supérieure (2a) et une moitié inférieure (2b),
- **en ce que** le moule (2) se compose à chaque fois d'une coque pleine profilée extérieure du côté de l'extrémité (8, 10), qui se compose à son tour à chaque fois d'une demi-coque profilée supérieure (8a, 10a) et d'une demi-coque profilée inférieure (8b, 10b), avec entre elles deux coques pleines profilées intérieures centrales (12, 14), qui se composent à leur tour d'une demi-coque profilée supérieure (12a, 14a) et d'une demi-coque profilée inférieure (12b, 14b),
- **en ce que** les coques pleines profilées extérieures du côté de l'extrémité (8, 10) présentent à chaque fois une surface intérieure concave, et
- **en ce que** les coques pleines profilées intérieures centrales 12 14) sont réalisées à chaque fois des deux côtés avec une forme concave, c'est-à-dire biconcave.

4. Dispositif selon la revendication 3,
**caractérisé en ce que**
le moule (2) constitué de coques profilées (8, 10, 12, 14) et de plateaux de bout (16, 18) disposés aux deux extrémités est incorporé dans une presse.

5. Dispositif selon la revendication 3 ou 4,
**caractérisé en ce que**
les coques profilées intérieures centrales (12, 14) présentent à chaque fois un contour en forme d'armature en fil métallique (30, 32) pour recevoir une ébauche (20) pourvue d'armatures en fil métallique entre les plis (34, 36, 38).

6. Dispositif selon l'une quelconque des revendications 3 à 5,
**caractérisé en ce que**
les demi-coques profilées supérieures (8a, 10a, 12a, 14a) et inférieures (8b, 10b, 12b, 14b) sont en liaison coopérante les unes avec les autres par le biais de crémaillères (40a, 46a, 48a, 54a ; 40b, 46b, 48b, 54b) et de roues dentées (42a, 44a, 50a, 52a ; 42b, 44b, 50b, 52b) en plus de couronnes dentées supplémentaires,
- la crémaillère (40a) se trouvant sur la demi-coque profilée extérieure supérieure (8a) du côté de l'extrémité et est en prise avec une roue dentée (42a) se trouvant sur la première demi-coque profilée intérieure centrale (12a) et avec une roue dentée (44a) se trouvant sur l'autre demi-coque profilée extérieure (10a) du côté de l'extrémité, et
- la roue dentée (42a) se trouvant sur la demi-coque profilée intérieure centrale (12a) présentant une deuxième couronne dentée avec deux fois moins de dents qui est en prise avec une crémaillère (46a) fixée sur la deuxième demi-coque profilée intérieure centrale (14a),
- une crémaillère (48a) étant en outre fixée sur la deuxième demi-coque profilée extérieure supérieure (10a) du côté de l'extrémité, et étant en prise avec une roue dentée (50a) se trouvant sur la deuxième demi-coque profilée intérieure centrale (14a) et avec une roue dentée (52a) se trouvant sur la première demi-coque profilée extérieure (8a) du côté de l'extrémité, et
- la roue dentée (50a) se trouvant sur la deuxième demi-coque profilée intérieure centrale (14a) présentant une deuxième couronne dentée ayant deux fois moins de dents, qui est en prise avec une crémaillère (54a) fixée sur la première demi-coque profilée intérieure centrale (12a), des liaisons synchrones ayant lieu dans le cas des segments profilés inférieurs (8b, 10b, 12b, 14b) - par comparaison avec les liaisons supérieures.
